Europäisches Patentamt

European Patent Office

Office européen des brevets

(11) Publication number: **0 104 722**
**B1**

(12) **EUROPEAN PATENT SPECIFICATION**

(45) Date of publication of patent specification: **30.12.86**

(21) Application number: **83304338.3**

(22) Date of filing: **27.07.83**

(51) Int. Cl.⁴: **A 61 D 3/00, A 01 K 1/06**

(54) Improvements in or relating to animal pens.

(30) Priority: **29.07.82 GB 8221947**

(43) Date of publication of application:
**04.04.84 Bulletin 84/14**

(45) Publication of the grant of the patent:
**30.12.86 Bulletin 86/52**

(84) Designated Contracting States:
**DE FR**

(56) References cited:
**AT-B- 355 941**
**GB-A-1 353 144**
**GB-A-1 483 347**
**GB-A-2 023 397**
**GB-A-2 046 068**
**US-A-2 767 997**
**US-A-3 237 603**
**US-A-3 513 812**
**US-A-3 892 203**

(73) Proprietor: **WOOD, Kenneth Edwin**
**Blakeway Farm Harley**
**GB-Nr Shrewsbury, Shropshire DY5 6LT (GB)**

(72) Inventor: **WOOD, Kenneth Edwin**
**Blakeway Farm Harley**
**GB-Nr Shrewsbury, Shropshire DY5 6LT (GB)**

(74) Representative: **Lally, William et al**
**FORRESTER & BOEHMERT Widenmayerstrasse**
**4/I**
**D-8000 München 22 (DE)**

## Description

This invention relates to a pen for use in restraining an animal such as a cow or other bovine animal whilst an operation is carried out on the animal which requires the animal to be held as still as possible, such as a dental or other veterinary inspection, or treatment such as the giving of an injection.

Such a pen is known commonly as a cattle crush and comprises a generally elongate box-like frame structure having a lateral dimension just sufficient to receive the animal, a yoke at one end to receive the animal's head, and a door or gate at the other end through which the animal can enter the pen. The pen is longer than the animal and once the animal is in the pen, manual advancing means are actuated to cause a transverse bar to engage the hind quarters of the animal to urge the animal forward until its head is in engagement with the yoke.

The yoke engages the animal's head closely to minimise movement of the head and because the lateral dimensions of the pen are only just sufficient to receive the animal, side to side movement of the animal is also minimised. Of course the animal cannot move rearwardly because of the transverse bar.

This prior construction is described and claimed in GB—A—1,483,347 wherein a manual mechanism for actuating the advancing means with a mechanical advantage, is provided to enable the advancing means to be actuated single handedly.

However the prior construction has at least the following two disadvantages.

First, even with the mechanical advantage mechanism described in GB—A—1,483,347, manual operation of the advancing means is difficult, particularly where the animal becomes distressed and objects to being restrained.

Secondly, because the yoke has been in front of the animal, the animal can see the yoke as it is urged forwardly by the advancing means and thus the animal is even more likely to become distressed and object, thus increasing the difficulty of operating the advancing means.

Accordingly, it is an object of the present invention to provide a new or improved animal pen which overcomes or reduces these problems.

According to one aspect of the invention, we provide an animal pen comprising a plurality of elongate members interconnected to provide an animal receiving structure having door means adjacent the rear end of the structure to enable the animal to enter the pen, the door means comprising part of an advancing means which is adapted to engage the rear of the animal to urge the animal forwardly in the structure, yoke means which are adapted to close around a front part of the animal, characterised in that first and second fluid operated power means are provided, the first power means being connected between the advancing means and an elongate frame member and the second fluid operated power means being arranged to actuate the yoke means, the yoke means comprising a pair of closure members mounted for movement forwardly and inwardly of the pen so that the closure members engage the animal from behind, a link means being connected to the closure members, the second power means acting between the link means and an elongate frame member.

For example, the yoke means may be adapted to close around the neck of the animal to restrain the head from movement, but may if desired engage another front part such as behind the front shoulders of the animal but in this event greater head movement would be permitted.

The animal is thus not able to see the yoke means as it is advanced but only becomes aware of the yoke means as the closure members close around the animal's neck.

Thus the distress to the animal is considerably reduced compared to known constructions.

The advancing means may be carried on tracks within the structure.

The framework of elongate members may provide various openings through which an operation may be carried out on the animal, although part of the structure may be closed by a panel or panels engaged with the framework, if desired.

The pair of closure members, may be carried on tracks within the structure, and when the second fluid operated means is operated, the closure members may move together to close around the front part of the animal.

Preferably, the tracks for the closure members extend inwardly and forwardly within the structure.

Although the animal receiving structure comprises a framework through openings in which operations may be carried out on the animal restrained in the pen, in some cases it may be desirable for greater access to be gained to the animal.

Thus side doors may be provided which may be opened to enable an operation to be carried for example out on the sides or legs of an animal. For example a side door may be provided on each side of the structure, one towards the front and one towards the back of each side. Further, a front door may be provided to enable access to be gained direct to the animal's head.

It will be appreciated that when the animal is restrained by the yoke means and the advancing means, that such side doors when opened would not allow the animal to make any great movement in the structure and thus the animal remains restrained.

The pen may have a complete hydraulic system including hydraulic rams, which operate the first and second power means, control valves, and a pump and hydraulic reservoir, although preferably the pump and hydraulic reservoir are separate and the rams and control valves of the pen are connected thereto by pressure hoses. For example, the hydraulic rams of the pen may be operated using a tractor unit such as are commonly used on farms, to which the pen has obvious application.

If desired, the pen may include means to lift the animal or a part of the animal such as a leg thereof, which means may be manually or power operated.

According to a second aspect of the invention we provide a method of restraining an animal comprising the steps of causing the animal to enter an animal pen according to the first aspect of the invention, through a rear door thereof, actuating the advancing means to urge the animal forwardly in the structure actuating the yoke means to close around a front part of the animal.

The invention will now be described with the aid of the accompanying drawings wherein:—

FIGURE 1 is a front perspective illustration of an animal pen in accordance with the invention;

FIGURE 2 is a side sectional view of the pen of Figure 1 taken on the lines A—A.

Referring to the drawings, an animal pen 10 comprises an animal receiving structure and comprises a main framework 11 of elongate members welded together to provide two sides 12, 13, a front end 14, a rear end 15, a top 16 and part of a floor structure 17.

The framework comprises four main corner posts 18, a roof frame 19, and a floor frame 20, the sides 12, 13 of the structure having intermediate main vertical members 21, as well as a plurality of horizontally and vertically extending members, to complete the framework 11.

Carried on the floor frame 20, which in use rests on the ground, is a timber decking 22.

The front end 14 of the structure is closed by a door 23 made of a sub-framework of elongate members 24.

The sides 12, 13 each have two doors 25, 26 of similar construction to door 23, but each being closed at the lower half by a metal panel 27, one door 25 being towards the front end 14 of the structure and the other door 26, towards the rear end 15.

The rear end 15 of the structure has a door opening in which a sub-frame 28 of an advancing means is received.

The advancing means comprises two side parts 29a, 29b, comprising posts and metal panels the lower ends of the panels having lower rollers or other runner formations received in tracks 30a on the timber decking 22 and upper runner formations received in upper tracks 30b of the roof frame 19, which tracks 30a, 30b extend longitudinally of the structure, and a rear door 31 pivoted for opening on one of the side parts 29a. The side parts 29a, 29b are held apart at the top ends thereof by a rectangular framework 32 having an intermediate cross member 33.

In the present example the lateral dimensions of the pen are just sufficient to enable a cow to be received therein, when the rear door 31 of the advancing means is opened, but is somewhat longer than a cow. Of course if a similar structure is to be provided for restraining other animals such as sheep or horses, the dimensions of the pen would need to be adjusted to suit the type of animal concerned.

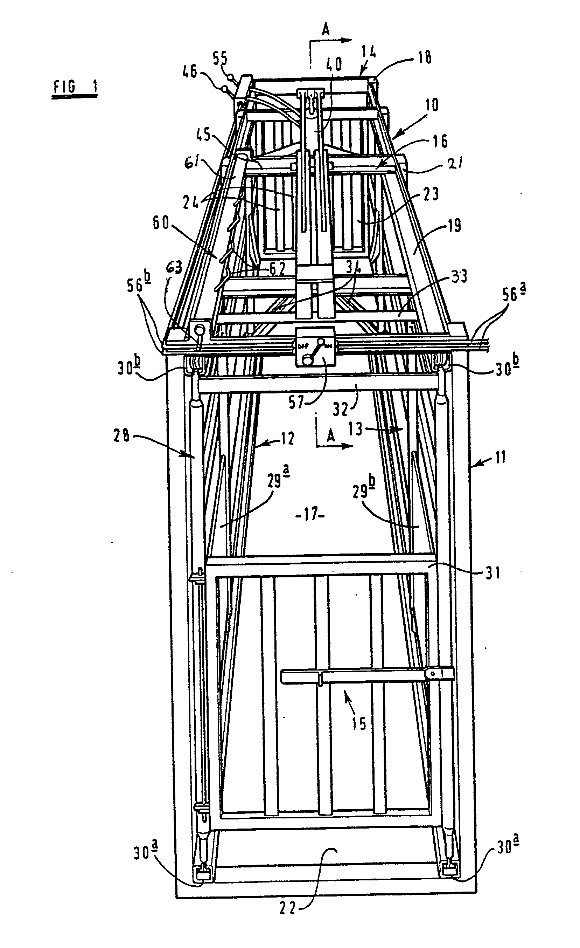

Adjacent the front end 14 of the structure, a further pair of tracks 34 are provided on the timber decking 22 which tracks 34 extend from the sides inwardly and forwardly, and nearly meet adjacent a longitudinal centre line of the structure. Mounted for movement in each of the tracks 34, is a closure member 35 which is pivoted at one side 36 adjacent the side 12 or 13, of the framework. Thus the closure members 35 may be pivoted between an open position as shown in Figure 1, to a closed position guided by the tracks 34, wherein the closure members 35 engage a front part of an animal received in the pen such as the neck of the animal to restrain the head from movement. Because the tracks 34 extend forwardly, and the closure members 35 are pivoted forwardly of the tracks 34, the closure members may be closed around the animal's neck from behind so that the animal does not see the members 35 closing and thereby does not become distressed.

By the time that the animal becomes aware of the closure members 35 being closed, its head is restrained by them in the manner of a yoke means.

The advancing means are hydraulically powered, a hydraulic ram 40 acting between two lever members 41, 42, the member 41 being pivotally connected at one end to the intermediate cross member 33 of the advancing means. The other end of the lever member 41 is connected to the cylinder part 43a of the ram 40. One end 44 of the other lever member 42 is connected for pivotal movement, intermediate the ends of the lever member 41, whilst the other end thereof is connected to a fixed cross member 45 of the roof of frame 19.

Piston part 43b of the ram 40 is connected intermediate the ends of the second lever member 42. Thus as the piston part 43b is retracted into the cylinder part 43a of the ram 40, the advancing means is moved forwardly in the structure guided by the tracks 30a, 30b, to urge an animal in the structure forwardly. The ram 40 is actuated in well known manner by a hydraulic fluid system controlled by a control valve 46 mounted on the roof frame 19 adjacent the front end 14 of the structure.

The upper end of each side part 50 of each of the closure members 35 are connected by a linkage mechanism 51 to a further hydraulic ram 52, the cylinder part 53a of which is also connected to the fixed cross member 45 of the roof frame 19, whilst the piston part 53b is connected to the linkage mechanism 51. Thus as the ram 52 is extended from the cylinder part 53a, the closure members 35 are together pivoted to a closed position around the animal's neck for example or another front part of the animal as required. Again, the ram 52 is actuated in well known manner by a hydraulic fluid system controlled by a control valve 55 mounted on the roof frame 19 adjacent the front of the structure.

In this example pressurised hydraulic fluid is provided from an external tractor unit (not shown) and returned to the tractor unit via pressure hoses 56a which extend to a master valve 57 provided at the rear of the pen 10 which master valve 57 controls the overall flow of fluid to each of the control valves 46, 55 via further hydraulic pressure hoses 56b. If required, the pen may be provided with its own hydraulic pressurising means, such as a pump, and hydraulic reservoir instead of utilising the pressurising means of an external tractor unit.

Operation of the pen 10 is as follows.

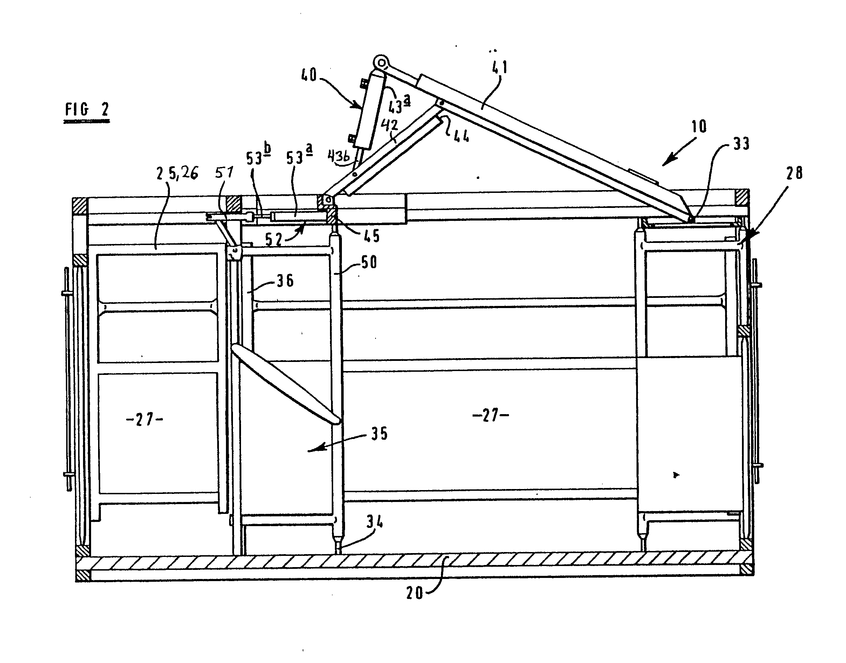

With the advancing means and yoke means in the position shown in Figures 1 and 2, the rear door 31 is opened to allow an animal to enter the pen 10 through the door means opening at the rear of the structure. The door 31 is then closed and the advancing means actuated by operating control valve 46, to urge the animal forwardly in the pen 10 until its neck is adjacent the front of the tracks 34.

The closure members 35 are then closed by operating valve 55 until the closure members 35 engage the animal's neck closely. If necessary, the advancing means may be further advanced thereafter, to provide further restraint.

Operations may then be carried out on the animal either through the openings in the upper part of the framework 11, or by opening one or more of the end or side doors 23, 25, 26.

In case it is desired to lift the animal's leg for example in a sling so that an operation may be carried out on the hoof or foot of the animal, a manually operated lifting means 60 is provided comprising a rotational shaft 61 having a plurality of hooks 62 along its length.

The sling is secured to one of the hooks 62 and around the animal's leg, and the shaft 61 is rotated by means of a handle and ratchet mechanism 63 thereby wrapping the sling around the shaft 61 and lifting the animal's leg.

Of course if desired, means may be provided to lift the entire animal which could be achieved by a hydraulic power means or a manual means as required.

Of course, many modifications may be made to the pen described without departing from the scope of the invention. For example, instead of the particular configuration of hydraulic power means described, other configurations are possible. For example, instead of the single hydraulic ram 52 to actuate the closure members 35 via the linkage mechanism 51, a pair of hydraulic rams may be provided if required. Furthermore, instead of the fluid operated means comprising an hydraulic system, if desired a pneumatic system could alternatively be provided. The structure of the pen may be modified as required to suit a particular animal, or for a particular operation to be carried out on an animal, e.g. the metal panels 27 may be omitted and/or additional framework members may be provided.

The advancing means and/or closure members 35 need not run in tracks 30a, 30b, 34, but may be connected for movement in any other desired manner as required.

If it is desired that the pen be transportable, the pen 10 may be mounted on a wheel structure which could be adapted to permit the pen to be lowered to the ground so that there is no step for the animal to enter the pen.

**Claims**

1. An animal pen comprising a plurality of elongate members interconnected to provide an animal receiving structure (11) having door means (31) adjacent the rear end (15) of the structure to enable the animal to enter the pen (10), the door means (31) comprising part of an advancing means (29a, 29b) which is adapted to engage the rear of the animal to urge the animal forwardly in the structure (11), yoke means (35) which are adapted to close around a front part of the animal, characterised in that first and second fluid operated power means (40, 52) are provided, the first power means (40) being connected between the advancing means (29a, 29b) and an elongate frame member (45) and the second fluid operated power means (52) being arranged to actuate the yoke means (35), the yoke means (35) comprising a pair of closure members mounted for movement forwardly and inwardly of the pen (10), so that the closure members engage the animal from behind, a link means (51) being connected to the closure members, the second power means (52) acting between the link means and said elongate frame member (45).

2. A pen according to Claim 1 characterised in that the framework of the animal receiving structure (11) provides various openings through which operations may be carried out on an animal received in the pen.

3. A pen according to claim 1 or claim 2 characterised in that the pair of closure members (35) are carried on tracks (34) within the structure (11), the tracks extending inwardly and forwardly within the structure (11).

4. A pen according to any one of claims 1 to 3 characterised in that the structure (11) has one or more doors (23, 25, 26) openable to enable an operation to be carried out on an animal.

5. A pen according to any one of the preceding claims characterised in that first and second fluid operated power means comprise hydraulic rams, and the pen has a hydraulic system including the hydraulic rams (40, 52) and control valves (46).

6. A pen according to any one of the preceding claims characterised in that the pen has means (60) to lift an animal in the structure (11) or a part of the animal.

7. A method of restraining an animal comprising the steps of causing the animal to enter an animal pen (10) according to any one of claims 1 to 6, through the rear door (31) thereof, actuating the advancing means (29a, 29b) to urge the animal forwardly in the structure and actuating the yoke means (35) to close around a front part of the animal.

## Patentansprüche

1. Tierstall aufweisend eine Mehrzahl von langgestreckten Elementen, welche untereinander verbunden sind, um eine ein tieraufnehmende Struktur (11) zu ergeben, welche Tierelemente (31) besitzt, angrenzend dem rückwärtigen Ende (15) der Struktur, um es zu ermöglichen, daß das Tier den Stall (10) betritt, wobei die Türelemente (31) einen Teil nach vorne Bewegungselementen (29a, 29b) aufweist, welche geeignet ist, mit dem Hinterteil des Tieres zusammenzuwirken um das Tier nach vorne zu zwingen, in die Struktur (11), wobei weiter Jochelemente (35) vorgesehen sind, welche geeignet sind, um den vorderen Teil eines Tieres herum zu schließen, dadurch gekennzeichnet, daß erste und zweite fluidbetätigte Leistungselemente (40, 52) vorgesehen sind, wobei die ersten Leistungselemente (40) zwischen den nach vorne Bewegungselementen (29a, 29b) und einem lang gestreckten Rahmenteil (45) verbunden sind, und die zweiten Fluidbetätigten Leistungselemente (25) so angebracht sind, daß sie die Jochelemente (35) betätigen, wobei die Jochelemente (35) ein Paar von Schließelementen aufweisen, die Angebracht sind für eine Bewegung nach vorne und innen des Stalls (10), so daß die Schließelemente mit dem Tier von hinten zusammenwirken, wobei weiter ein Verbindungselement (51) mit den Schließelementen verbunden ist und die zweiten Leistungselemente (52) zwischen den Verbindungselementen und dem langgestrecktem Rahmenelement (45) wirken.

2. Stall nach Anspruch 1, dadurch gekennzeichnet, daß das Rahmenwerk der das Tier aufnehmenden Struktur (11) verschiedene Öffnungen aufweist, durch welche Betätigungen ausgeführt werden können an dem Tier, welches sich in dem Stall befindet.

3. Stall nach Anspruch 1 oder 2, dadurch gekennzeichnet, daß ein Paar von Schließelementen (35) an Schienen (34) geführt sind, in der Struktur (11), wobei die Schienen sich nach innen und vorne in der Struktur (11) erstrecken.

4. Stall nach einem der Ansprüche 1 bis 3, dadurch gekennzeichnet, daß die Struktur (11) eine oder mehrere Türen (23, 25, 26) besitzt, die öffenbar sind, um eine Betätigung, die an dem Tier auszuführen ist, zu ermöglichen.

5. Stall nach einem der vorstehenden Ansprüche, dadurch gekennzeichnet, daß erste und zweite fluidbetätigte Leistungselemente hydraulische Kolben aufweisen und das der Stall ein hydraulisches System besitzt, einschließlich der hydraulischen Kolben (40, 52) und Steuerventile (46).

6. Stall nach einem der vorstehenden Ansprüche, dadurch gekennzeichnet, daß der Stall Elemente (60) besitzt, um ein Tier in der Struktur (11) oder einen Teil des Tieres anzuheben.

7. Verfahren zur Rückhalterung eines Tieres, aufweisend die Schritte, daß Tier zu zwingen, einen Tierstall (10) gemäß einem der Ansprüche 1 bis 6 zu betreten, durch die rückwärtige Tür (31), betätigen der Vorwärtsbewegungselemente (29a, 29b), um das Tier nach vorne in die Struktur zu zwingen und betätigen der Jochelemente (35), um sie um einen Vorderteil des Tieres herum zu schließen.

## Revendications

1. Cage pour animal comprenant plusieurs organes allongés reliés les uns avec les autres pour former une structure (11) adaptée à recevoir un animal et présentant des moyens formant porte (31) adjacents à l'extrémité postérieure (15) de la structure pour permettre à l'animal de pénétrer dans la cage (10), les moyens formant porte (31) comprenant une partie de moyens pousseurs (29a, 29b) qui sont adaptés à venir en prise avec le postérieur de l'animal pour pousser celui-ci vers l'avant dans la structure (11), des moyens formant joug (35) qui sont adaptés à se refermer autour d'une partie antérieure de l'animal, caractérisée en ce qu'il est prévu des premiers et seconds moyens moteurs actionnés par fluide (40, 52), les premiers moyens moteurs (40) étant reliés entre les moyens pousseurs (29a, 29b) et un organe de chassis allongé (45) et les seconds moyens moteurs actionnés par fluide (52) étant conçus pour actionner les moyens formant joug (35), les moyens formant joug (35) comprenant une paire d'organes de fermeture déplaçables vers l'avant et l'intérieur de la cage (10) de sorte que les organes de fermeture viennent en prise avec l'animal depuis l'arrière, des moyens de liaison (51) étant reliés aux organes de fermeture, les seconds moyens moteurs (52) agissant entre les moyens de liaison et l'organe de chassis allongé (45).

2. Cage conforme à la revendication 1, caractérisée en ce que le chassis de la structure adaptée à recevoir un animal (11) présente plusieurs ouvertures à travers lesquelles on peut procéder à des opérations sur un animal occupant la cage.

3. Cage conforme à l'une des revendications 1 ou 2, caractérisée en ce que la paire d'organes de fermeture (35) est supportée par des rails (34) situés dans la structure (11), les rails s'étendant vers l'intérieur et vers l'avant dans la structure (11).

4. Cage conforme à l'une des revendications 1 à 3, caractérisée en ce que la structure (11) présente une ou plusieurs portes (23, 25, 26) pouvant être ouvertes pour permettre d'effectuer une opération sur un animal.

5. Cage conforme à l'une des revendications précédentes, caractérisée en ce que les premiers et seconds moyens moteurs actionnés par fluide comprennent des vérins hydrauliques, et la cage comporte un système hydraulique comprenant les vérins hydrauliques (40, 52) et des vannes de commande (46).

6. Cage conforme à l'une des revendications précédentes, caractérisée en ce que la cage présente des moyens (60) pour soulever l'animal dans la structure (11) ou une partie de l'animal.

7. Procédé pour retenir un animal comprenant les étapes de faire entrer l'animal dans une cage pour animal (10) selon l'une des revendications 1 à 6, par la porte arrière (31) de celle-ci, d'actionner les moyens pousseurs (29a, 29b) pour pousser l'animal vers l'avant dans la structure et d'actionner les moyens formant joug (35) pour les refermer autour d'une partie antérieure de l'animal.

FIG 1

FIG 2